# EUROPEAN PATENT APPLICATION

(11) **EP 2 767 946 A1**
(43) Date of publication of application: **20.08.2014**
(21) Application number: 14153712.6
(22) Date of filing: 03.02.2014
(51) Int. Cl.: G06Q 30/02, G06Q 30/06

(54) **Performing actions based on metadata associated with objects in a set of objects associated with a social networking system user**

(30) Priority: 14.02.2013 US 201313767145; 30.01.2014 WO PCT/US2014/013789
(71) Applicant: Facebook, Inc., Menlo Park, CA 94025 (US)
(72) Inventor: Flores, Eglia Nair, Menlo Park, CA 94025 (US)
(74) Representative: Schröer, Gernot H.

(57) **Abstract**

A social networking system user includes objects maintained by the social networking system in a collection of objects associated with the user's user profile. The objects in a collection may be associated with a product or service offered by a system external to the social networking system. A story may be generated describing the product associated with the object added to the collection. The story may be presented to other social networking system users connected to the user. Metadata describing the product is associated with the object included in the collection and is updated. The user may be notified of the updated metadata or an action may be performed if the updated metadata satisfy one or more criteria.

## Description

### TECHNICAL FIELD

This invention relates generally to social networking systems, and in particular to creating collections of objects maintained by the social networking system, in particular to a computer implemented method.

### BACKGROUND

A social networking system allows its users to connect to and communicate with other social networking system users. Users create profiles on the social networking system that include information about the users, such as interests and demographic information. The users may be individuals or entities such as corporations or charities. The increasing popularity of social networking systems and the significant amount of user-specific information maintained by social networking systems make a social networking system an ideal forum for users to express themselves and share their interests through content maintained by the social networking system. As much of the content maintained by social networking systems is associated with consumer products, a social networking system also provides a forum for users to become aware of products or to facilitate discussions about products.

Conventionally, social networking systems allow users to organize products and other items found on the social networking system and third party websites into collections associated with their profiles. For example, users are able to create and manage theme-based collections such as hobbies, animals, etc. However, items within these theme-based collections are not linked to products associated with the items in a manner that allows users to access dynamic information about the products. Additionally, conventional social networking systems do not generate stories associated with a user's collection of items for presentation to other users of the social networking system, such as on a timeline or newsfeed, which may increase public awareness about products associated with the items.

### SUMMARY

Social networking systems have conventionally enabled users to create and manage collections of items found within the social networking system and on third party websites. For example, a user may create the collections "cute pets" and "cool cars" and add images they find on the social networking system and third party websites to these collections. However, this merely adds the images to a collection, not information associated with items shown in the images. Hence, information associated with items shown in the image is not readily accessible from a collection and changes to information associated with items in the image are not automatically communicated to the collections. For example, if a user adds an image of a Maserati to his "cool cars" collection, information associated with the item in the image, such as the price of the car, will not be updated when the user views the image of the Maserati in his collection when the price of the car changes. Likewise, other users viewing the image via the collection and adding the image to another user's collection are not be presented with updated information associated with the item shown in the image. Additionally, conventional social networking systems typically do not present stories associated with a user's collection of items to other users including options such as purchasing an item or adding an item to their own collections.

To provide users with dynamic information associated with a user's collection of items, a social networking system associates products (as well as services, games, videos, etc.) and metadata describing the products (e.g., price) with and objects maintained by the social networking system. The objects may be defined by an entity external to the social networking system, such as an entity providing a product or service. Metadata (e.g., title, image, price, etc.) remains associated with a product after the object associated with the product is added to a collection, allowing the metadata to be accessible from the collection. In one embodiment, a user's collection is presented using a dynamic interface capable of presenting updated metadata about objects included in the collection. For example, metadata associated with a product, such as price and availability, may be updated based on information from a third-party system, and the updated price and availability is presented when the user views the collection including an object associated with the product. In one embodiment, third-party systems may use metadata associated with a user's collections to select target audiences for advertising. For example, if metadata associated with a user's collection indicates the a majority of objects in the collection are associated with wedding gowns, advertisements for wedding rings or bridesmaid dresses may be subsequently presented to the user.

To increase awareness of products, the social networking system generates a story describing a user's adding an object associated with a product in a collection. The story may be presented on a timeline associated with a user profile of the user adding the object associated with the product to the collection, presented in newsfeeds of other users to which the user is connected, or distributed using any suitable communication channel. Users viewing the story may easily add the product associated with the story to a collection, view other products in the collection to which the object was added by selecting one or more options included in the story. Additionally, users may select an option to view other collections including the product that was collected and a user may add an object to an associated collection while viewing a collection associated with another user.

A user may choose to be notified when metadata associated with a product associated with an object in a collection is modified. The user may specify one or more collections for which notifications of changes to metadata are received, allowing the user to limit the social networking system automatically notifies the user only when metadata associated with a product in a user's "wish list" collection is updated. Alternatively, the social networking system automatically notifies a user when metadata associated with an object in a collection associated with the user is modified. For example, a user may be notified if a sweater associated with an object in its collection is on sale. A user may specify one or more criteria for metadata associated with a product associated with an object in a collection and an action that is performed when the metadata satisfy the one or more criteria. For example, a user may specify that a product associated with an object in a collection is purchased when the metadata associated with the product satisfies one or more criteria. As an example, if a third-party system's inventory for a sweater associated with an object in a user's collection is less than a threshold, a request to purchase the sweater is communicated from the social networking system to the third-party system.

Embodiments according to the invention are in particular disclosed in the attached claims, wherein any feature mentioned in one claim category, e.g. method, can be claimed in another claim category, e.g. system, as well.

In an embodiment according to the invention, a method comprises:
storing one or more objects each associated with products in a set of objects associated with a user profile of a user of a social networking system;
receiving metadata associated with one or more of the products associated with an object in the set of objects;
determining whether the received metadata satisfies one or more criteria stored by the social networking system and associated with the user profile; and
performing an action responsive to determining the received metadata satisfies one or more of the criteria.

The one or more criteria can be specified by the user.

The action can comprise purchasing a product associated with received metadata satisfying the one or more criteria.

Purchasing the product associated with received metadata satisfying the one or more criteria can comprise:
identifying a third-party system associated with the product;
retrieving financial account information associated with the user; and
transmitting a request to purchase the product to the third-party system associated with the product, the request including a subset of the retrieved financial account information.

The action can comprise notifying the user of the received metadata;

in particular wherein:
identifying a notification channel associated with the user; and
sending a notification of the updated metadata through the identified notification channel.

The notification channel can be selected from a group consisting of: text message, electronic mail, mobile push notification, instant messenger, and any combination thereof.

The metadata can be selected from a group consisting of: product name, description, image, price, quantity available, color, style, promotional offers, information provided by a seller, information provided by a brand owner, and any combination thereof.

In a further embodiment of the invention, a method comprises:
storing one or more objects each associated with products and associated with metadata describing one or more characteristics of each products in a set of objects associated with a user profile of a user of a social networking system;
storing one or more criteria for notifying the user of changes of the metadata describing one or more characteristics of a product associated with an object in the set;
retrieving updated metadata associated with one or more products associated with objects in the set from a third party website associated with a domain differing from a domain of the social networking system;
determining one or more differences between the updated metadata for one or more products and the metadata;
associating the updated metadata with objects in the set for which the updated metadata was received; and
performing an action if the updated metadata satisfies one or more criteria stored by the social networking system.

The one or more criteria can be specified by the user.

The action can comprise purchasing a product associated with updated metadata satisfying the one or more criteria.

Purchasing the product associated with updated metadata satisfying the one or more criteria can comprise:
identifying a third-party system associated with the product;
retrieving financial account information associated with the user; and
transmitting a request to purchase the product to the third-party system associated with the product, the request including a subset of the retrieved financial account information.

The action can comprise notifying the user of differences between the updated metadata and the metadata.

Notifying the user of differences between the updated metadata and the metadata can comprise:
identifying a notification channel associated with the user; and
sending a notification of the differences between the updated metadata and the metadata through the identified notification channel.

The action can comprise notifying the user of the updated metadata;

in particular wherein:
identifying a notification channel associated with the user; and
sending a notification of the updated metadata through the identified notification channel.

The notification channel can be selected from a group consisting of: text message, electronic mail, mobile push notification, instant messenger, and any combination thereof.

The metadata can be selected from a group consisting of: product name, description, image, price, quantity available, color, style, promotional offers, information provided by a seller, information provided by a brand owner, and any combination thereof.

In a further embodiment of the invention, which can be claimed as well, one or more computer-readable non-transitory storage media embody software that is operable when executed to perform a method according to the invention or any of the above mentioned embodiments.

In a further embodiment of the invention, which can be claimed as well, a system comprises: one or more processors; and a memory coupled to the processors comprising instructions executable by the processors, the processors operable when executing the instructions to perform a method according to the invention or any of the above mentioned embodiments.

### BRIEF DESCRIPTION OF THE DRAWINGS

- FIG. 1: is a block diagram of a system environment in which a social networking system operates, in accordance with an embodiment of the invention.
- FIG. 2: is a block diagram of a social networking system, in accordance with an embodiment of the invention.
- FIG. 3: is an example of a collection of objects associated with a social networking system user, in accordance with an embodiment of the invention.
- FIG. 4: is a flow chart of a method for interacting with an object associated with a product, in accordance with an embodiment of the invention.
- FIG. 5: is an example of adding an object to a collection, in accordance with an embodiment of the invention.
- FIG. 6: is an example user interface for presenting collections of objects associated with a user, in accordance with an embodiment of the invention.
- FIG. 7: is an example of a story describing inclusion of an object in a collection by a social networking system user, in accordance with an embodiment of the invention.
- FIG. 8: is an additional example of a story describing inclusion of an object in a collection by a social networking system user, in accordance with an embodiment of the invention.
- FIG. 9: is an example user interface for specifying criteria for actions based on metadata associated with a product corresponding to an object in a collection, in accordance with an embodiment of the invention.

The figures depict various embodiments of the present invention for purposes of illustration only. One skilled in the art will readily recognize from the following discussion that alternative embodiments of the structures and methods illustrated herein may be employed without departing from the principles of the invention described herein.

### DETAILED DESCRIPTION

### Overview

A social networking system allows users to create collections including objects associated with products, services, games, videos, or other similar items (referred to herein collectively as "products"). A collection is associated with a user's user profile. An object included in the collection is associated with data and metadata describing the product associated with the object (e.g., images, description, price, colors, availability, etc.). Additionally, an object may be defined by an entity external to the social networking system, such as a retailer or other provider of the associated product. Metadata and/or data describing the product is initially received when the associated object is stored by the social networking system and remains associated with the product when an object associated with the product is included in a collection. As the metadata describing the product is updated, the updated metadata is presented via the collection, allowing presentation of updated information about a product to users viewing a collection including an object associated with the product. Additionally, metadata associated with a user's collections may be used to select target audiences for advertising.

In one embodiment, the social networking system presents a user with one or more options when a request to add an object associated with a product to a collection is received from the user. The request to add the object associated with the product to the collection may be received from a user interacting with an interface element associated with the object or associated with the product on a third-party website. The user may add an object associated with the product to an existing collection or create a new collection including the object associated with the product. Additional options may be presented to the user when adding an object to a collection. Examples of additional options include: providing a comment or reason a for including the object in a collection, purchasing the product associated with the object, indicating a preference for the product associated with the object, sharing the object with other users, etc. If the social networking system receives a request from a user to purchase a product associated with an object, the user is directed to a destination for completing the purchase.

In one embodiment, the social networking system generates a story describing addition of an object to a collection and presents the story to other users connected to the user adding the object to the collection. For example, the story is presented on a timeline associated with the user's profile, presented in a newsfeed displayed to another user connected to the user adding the object to the collection, or presented using any suitable communication channel. The story may include one or more interface elements allowing users presented with the story to perform actions. For example, interface elements may allow a user to add a product described in the story to a collection, to purchase the product, to share the product with other users, to comment on the addition, to view other products in the collection to which the object associated with the product was added, and to view other collections to which the product was added. A user may also add an object to a collection while viewing the object tin a collection of another user.

The social networking system may notify a user when metadata describing a product associated with an object in a collection is modified. In one embodiment, the social networking system automatically notifies the user of modifications to metadata associated with products corresponding to objects in a collection, and may use any suitable communication channel to perform the notification. For example, a user may be automatically notified by email if a sweater in its "wish list" collection is on sale. Alternatively, a user may specify one or more criteria so the user is notified of changes to the metadata when one or more of the criteria are satisfied. For example, a user specifies to be notified of changes to the price of a sweater associated with an object in a collection if the price reaches a threshold amount, such as half its original price or half of its price when a corresponding object was added to a collection. As another example, a user may limit notifications to changes of metadata associated with a specific collection. Additionally, a user may specify one or more criteria for metadata associated with a product that, when satisfied, requests purchase of the product from a third-party system. For example, a user may specify that a video game associated with an object in a collection is automatically purchased when a third-party system has less than five units of the video game in stock.

### System Architecture

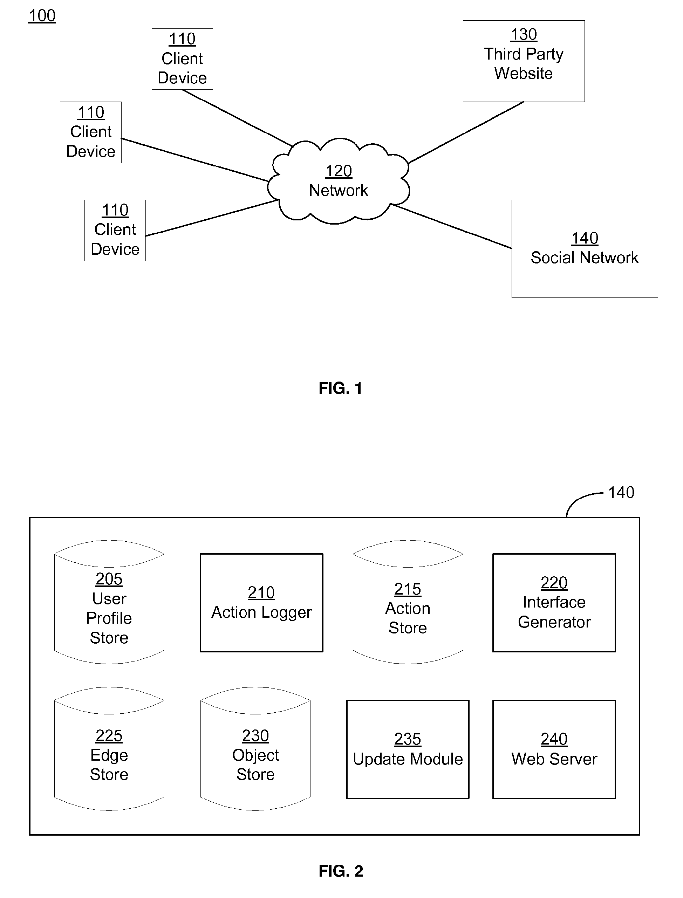

FIG. 1 is a high level block diagram illustrating a system environment 100 for a social networking system 140. The system environment 100 shown by FIG. 1 comprises one or more client devices 110, a network 120, one or more third party websites 130, and a social networking system 140. In alternative configurations, different and/or additional components may be included in the system environment 100. Additionally, the embodiments described herein can be adapted to online systems that are not social networking systems.

The client devices 110 comprise one or more computing devices capable of receiving input as well as transmitting and/or receiving data via the network 120. In one embodiment, a client device 110 is a conventional computer system, such as a desktop or laptop computer. In another embodiment, a client device 110 may be a device having computer functionality, such as a personal digital assistant (PDA), a tablet computer, a mobile telephone, a smart-phone or similar device. A client device 110 is configured to communicate via the network 120. In one embodiment, a client device 110 executes an application allowing a user of the client device 110 to interact with the social networking system 140. For example, a client device 110 executes a browser application to enable interaction between the client device 110 and the social networking system 140 via the network 120. In another embodiment, a client device 110 interacts with the social networking system 140 through an application programming interface (API) that runs on the native operating system of the client device 110, such as IOS® or ANDROID™.

The client devices 110 are configured to communicate information via the network 120, which may comprise any combination of local area and/or wide area networks, using both wired and wireless communication systems. In one embodiment, the network 120 uses standard communications technologies and/or protocols. Thus, the network 120 may include communication channels using technologies such as Ethernet, 802.11, worldwide interoperability for microwave access (WiMAX), 3G, 4G, code division multiple access (CDMA), digital subscriber line (DSL), or other suitable communication technologies. The network 120 may use any suitable networking protocol or combination of networking protocols, such as multiprotocol label switching (MPLS), transmission control protocol/Internet protocol (TCP/IP), User Datagram Protocol (UDP), hypertext transport protocol (HTTP), simple mail transfer protocol (SMTP) and file transfer protocol (FTP). Data exchanged over the network 120 may be represented using technologies and/or formats including hypertext markup language (HTML) or extensible markup language (XML), or any other suitable format. In addition, all or some of the communication channels may be encrypted using conventional encryption technologies such as secure sockets layer (SSL), transport layer security (TLS), and Internet Protocol security (IP-sec). The third party website 130 may be coupled to the network 120 for communicating with the social networking system 140, which is further described below in conjunction with FIG. 2.

FIG. 2 is a block diagram of an example architecture of the social networking system 140. In the architecture shown by FIG. 2, the social networking system 140 includes a user profile store 205, an action logger 210, an action store 215, an interface generator 220, an edge store 225, an object store 230, an update module 235, and a web server 240. In other embodiments, the social networking system 140 may include additional, fewer, or different components. Conventional components such as network interfaces, security functions, load balancers, failover servers, management and network operations consoles, and the like are not shown so as to not obscure the details of the system architecture.

Each user of the social networking system 140 is associated with a user account and each user account is typically associated with a single user profile stored in the user profile store 205. A user profile includes declarative information about the user that was explicitly shared by the user, and may also include profile information inferred by the social networking system 140. A user profile may include multiple data fields, each data field describing one or more attributes of the corresponding user of the social networking system 140. Hence, information stored in the user profile store 205 describes characteristics of the users of the social networking system 140, including biographic, demographic, and other types of descriptive information, such as work experience, educational history, gender, hobbies or preferences, location, and any other suitable information. User profile information may also include data describing one or more relationships between a user and other users. Additionally, the user profile store 205 may also store other information provided by the user, for example, images, videos, or other objects; objects associated with a user and stored in a user profile may be organized into collections, which are further described herein. A user profile in the user profile store 205 may also maintain references to actions performed by the corresponding user that are stored in the action store 215.

While user profiles are frequently associated with individuals, user profiles may also be stored for entities such as businesses or organizations. This allows an entity to establish a presence on the social networking system 140 for connecting to other social networking system users and for exchanging content with other social networking system users. While an administrator or individual associated with the entity creates the user profile for the entity, the entity is identified as the account-holder associated with the user profile. The entity may post information about itself, about its products, including catalogs of products, or provide other information to users of the social networking system 140 using a brand page associated with the entity's user profile. Other users of the social networking system 140 may connect to the brand page to receive information posted to the brand page or to receive information associated with the brand page. A user profile associated with the brand page may include information about the entity itself, providing users with background data or other information about the entity.

The action logger 210 receives communications describing user actions internal to and/or external to the social networking system 140 and populates the action store 215 with information describing the user actions. Such actions may include, for example, adding a connection to another user, sending a message to another user, uploading an image, reading a message from another user, viewing content associated with another user, attending an event posted by another user, among others. In addition, a number of actions described in connection with other objects are directed at particular users, so these actions are associated with those users as well. These actions are stored in the action log 220. Some actions may be performed by users while not connected to the social networking system 140 and these actions are logged and communicated to the social networking system 140 when a connection is established.

The action store 215 maintains information describing actions by social networking system users internal to the social networking system 140, as well as actions performed via third party websites 130 that communicate information to the social networking system 140. Users may interact with various objects maintained by the social networking system 140, and these interactions are stored in the action store 215. Examples of actions stored by the action store 215 include: commenting on posts, sharing links, and checking-in to physical locations via a mobile device or other client device 110. Additional examples of interactions with objects on the social networking system 140 included in the action store 215 include commenting on a photo album, communications between users, becoming a fan of a musician, adding an event to a calendar, joining groups, becoming a fan of a brand page, creating an event, authorizing an application, using an application, interacting with an advertisement, collecting a product, and engaging in a transaction.

The interface generator 220 generates one more interfaces allowing users to interact with the social networking system 140. For example, the interface generator 220 generates one or more web pages including content from the social networking system 140, such as images, video, profile information, or other data. The interface generator 220 also generates one or more interfaces for receiving information from social networking system users via a client device 110 and the network 120. For example, the interface generator 220 generates a form for a user to provide the social networking system 140 with biographic information for creating a user profile. When another user requests a profile page including information describing a user, the interface generator 220 retrieves data from the user profile store 205 and generates a representation of the information in the user profile for presentation by a client device 110.

The interface generator 220 also generates a collections interface that allows users to create and manage collections of objects maintained by the social networking system 140. For example, the collections interface displays a collection including one or more objects identified by a user. Hence, a collection includes one or more objects grouped by a user or grouped based on one or more characteristics of the objects. The collections interface may display options for creating a new collection, adding objects maintained by the social networking system 140 to a collection, sharing a collection with other users, commenting on a collection, making a purchase of a product associated with an item included in a collection, or performing any other suitable action.

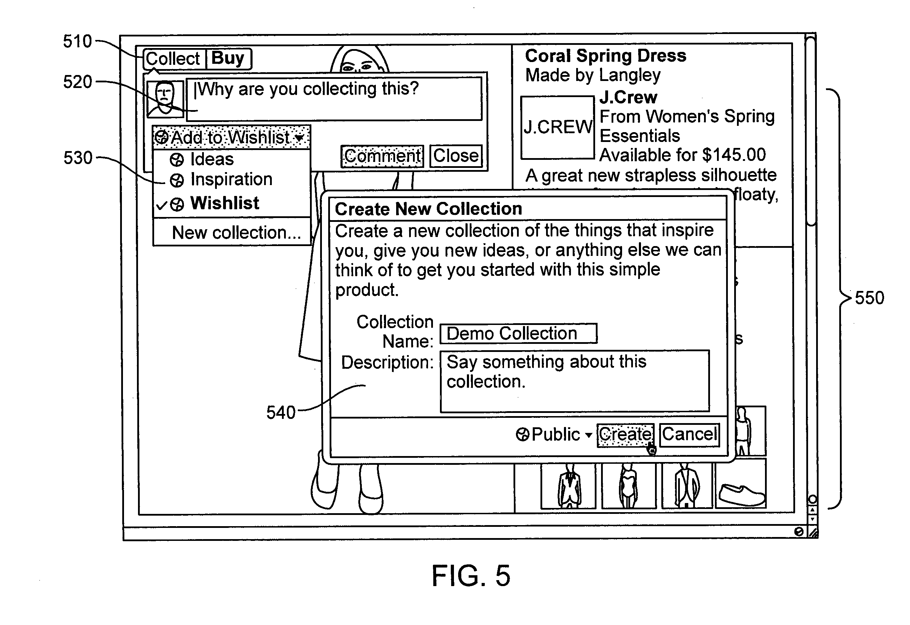

In one embodiment, the collections interface displays information about products associated with included in a collection being viewed; the information may be updated as it is changed by a third-party website 130 or other system providing the products. For example, the collections interface requests updated information about one or more products associated with objects in a collection from a third-party website 130 or other system external to the social networking system 140 using application programming interfaces (APIs) and/or a particular software development kit (SDK) or XML format. Alternatively, a third-party website 130 may the social networking system 140 with updated information associated with a product when a third-party website 130 updates information associated with the product, such as a catalog database. Presentation of options for creating collections of objects is further described below in conjunction with FIGS. 5-8.

The edge store 225 includes information describing connections between users and other objects on the social networking system 140 as edges. Some edges may be defined by users, allowing users to specify their relationships with other users. For example, users may generate edges with other users that parallel the users' real-life relationships, such as friends, co-workers, partners, and so forth. Establishing a connection to a user in a social networking system 140 may allow more access to additional information about the user to which the connection was established. For example, connected to each other may receive informational updates about each other, such as stories describing actions performed by one of the users r on the social networking system 140, Other edges are generated when users interact with objects in the social networking system 140, such as expressing interest in a page on the social networking system 140, sharing a link with other users of the social networking system 140, and commenting on posts made by other users of the social networking system 140.

The edge store 225 stores edge objects that include information about the edge, such as affinity scores for objects, interests, and other users. Affinity scores may be computed by the social networking system 140 over time to approximate a user's affinity for an object, interest, and other users in the social networking system 140 based on the actions performed by the user. A user's affinity may be computed by the social networking system 140 over time to approximate a user's affinity for an object, interest, and other users in the social networking system 140 based on the actions performed by the user. Computation of affinity is further described in U.S. Patent Application No. 12/978,265, filed on December 23, 2010, which is hereby incorporated by reference in its entirety. Multiple interactions between a user and a specific object may be stored in one edge object in the edge store 225, in one embodiment. In some embodiments, connections between users may be stored in the user profile store 205, or the user profile store 205 may access the edge store 225 to determine connections between users.

The object store 230 stores information about content maintained by the social networking system 140. Different content items, which represent individual pieces of content provided by the social networking system 140 to users, are stored as objects in the object store 230. Examples of objects include a page post, a status update, a photo, a video, a link, a shared content item, a gaming application achievement, a check-in event at a local business, a brand page, or any other type of content. Objects may be created by users of the social networking system 140, such as status updates, photos tagged by users to be associated with other objects in the social networking system, events, groups or applications. In some embodiments, objects are received from third-party applications or third-party applications separate from the social networking system 140. An object in the object store 230 may represent an entity existing within the social networking system 140 (e.g., an application available on the social networking system 140), a virtual entity outside of the domain of the social networking system 140 (e.g., a website), or a physical entity (e.g., a sports team or a retail store).

The object store 230 includes information for presenting a content item to a user. For example, the object store 230 includes a media item or data for executing an application. Alternatively, the object store 230 includes a pointer or a reference to a destination associated with an object, such as the uniform resource locator (URL) of an external media item. Additionally, the object store 230 may also store metadata associated with an object, such as a name describing the object (e.g. "Charles Williams" for a page for a person, "Birthday Reminder" for an application, or "Penguin Fanciers" for a group), an image representing the object (e.g., a user profile picture), or one or more tags assigned to the object by users (e.g. text strings "game," "crime," and "strategy" for a strategy game application). Different types of metadata may be associated with different types of objects, and a metadata associated with an object identifies the type of the object. For example, user identifiers are associated with a group object, a media type identifier (e.g., "video") is associated with a media item object, and a user identifier is associated with a user object.

The update module 235 receives and/or retrieves updated metadata describing products associated with objects maintained by the social networking system 140. The objects may be included in one or more users' collections. In one embodiment, the update module 235 receives or retrieves updated metadata at intervals set by the social networking system 140 or the user. Alternatively, the social networking system 140 retrieves updated metadata describing a product when a collection including an object associated with the product is accessed by a user. To receive updated metadata, the update module 235 may link a product associated with an object to one or more third-party websites 130 and receive information about the product from the one or more third-party websites 130. For example, the update module 235 links a product to a retail website offering the product for sale and receives information from the retail website describing pricing, availability, or other characteristics of the product. Any suitable method may be used by the update module 235 to receive metadata describing a product, such as application programming interfaces (APIs). Metadata may be communicated to the update module 235 from a source external to the social networking system 140 when the source stores data describing the product or when the source communicates data to the social networking system 140. Alternatively, metadata may be retrieved by the update module 235 via crawling, parsing, or any other retrieval method.

The update module 235 may replace the metadata associated with a product corresponding to an object in a collection with metadata received or retrieved after the object was included in the collection. For example, if the update module 235 determines that metadata associated with a product such as description, price, and color remain the same as when an object associated with the product was added to the collection, but that metadata describing the product's availability has changed, metadata associated with availability is updated while other metadata remains unchanged. Alternatively, the update module 235 associates objects included in a collection with the most recently obtained metadata for the associated products, regardless of whether metadata has been updated from when the objects were included in the collection. For example, if the update module 235 obtains metadata associated with a product (e.g., description, price, and color) which have not changed since an object associated with the product was included in a collection, as well as metadata associated with availability, which has changed since the object associated with the product was included in the collection, all of the recently obtained metadata is associated with the product, even the recently obtained metadata with values unchanged from when the object was included in the collection. The updated information is displayed to users viewing the collection, simplifying retrieval of metadata associated with products corresponding to objects in a collection. The update module 235 is further described below.

The web server 240 links the social networking system 140 via the network 120 to the one or more client devices 110, as well as to the one or more third party websites 130. The web server 240 serves web pages, as well as other web-related content, such as JAVA®, FLASH®, XML and so forth. The web server 240 may receive and route messages between the social networking system 140 and the client device 110, for example, instant messages, queued messages (e.g., email), text and short message service (SMS) messages, or messages sent using any other suitable messaging technique. A user may send a request to the web server 240 to store a content item in the object store 230 or to retrieve a content item from the object store 230. Additionally, the web server 240 may provide API functionality to send data directly to native client device operating systems, such as IOS®, ANDROID™, WEBOS® or RIM®.

### Collection Creation and Management

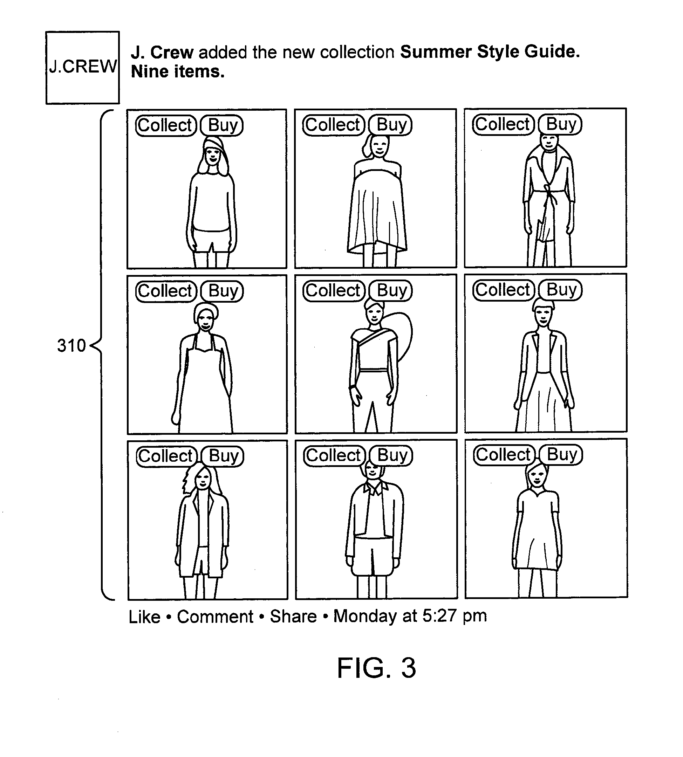

FIG. 3 is an example display of a collection of items by a social networking system 140. For example, an entity, such as a retailer, with a user profile on the social networking system 140 creates a collection 310 of objects corresponding to products, or other items, offered by the entity; hence, the entity may use the collection 310 as a catalog of products or items offered by the entity. In the collection 310 shown by FIG. 3, each object in the collection is associated with an image and other metadata (e.g., title, price, etc.) describing the product associated with the object. Additionally, an object associated with a product may be defined by an entity external to the social networking system 140, such as a third party website 130 associated with the entity, allowing increased customization of objects by entities outside of the social networking system. Metadata associated with the products corresponding to objects in the collection may be manually entered, retrieved from a third party website 130, maintained by the social networking system 140, or retrieved using any suitable technique. A collection may be viewed by the user creating the collection and/or by other social networking system, and other users may interact with an object in a collection to add the object to a user-specific collection.

The collections interface displays metadata associated with products corresponding to objects in a collection. The metadata may be dynamically updated based on information from a user, from a third party website 130, or from any other suitable source. In one embodiment, information received by the update module 235 from a third party website 130, as described above, is presented via the collections interface. In various embodiments, metadata is updated by the update module 235 at intervals set by the user or by the social networking system 140, when updated metadata is received by the social networking system 140 from third party websites 130, and/or when a collection is presented to one or more users. The social networking system 140 may infer a frequency with which to update metadata associated with products corresponding to objects in a user's collection based on the user's actions stored in the action store 215 (e.g., how often a user views an item in her collection).

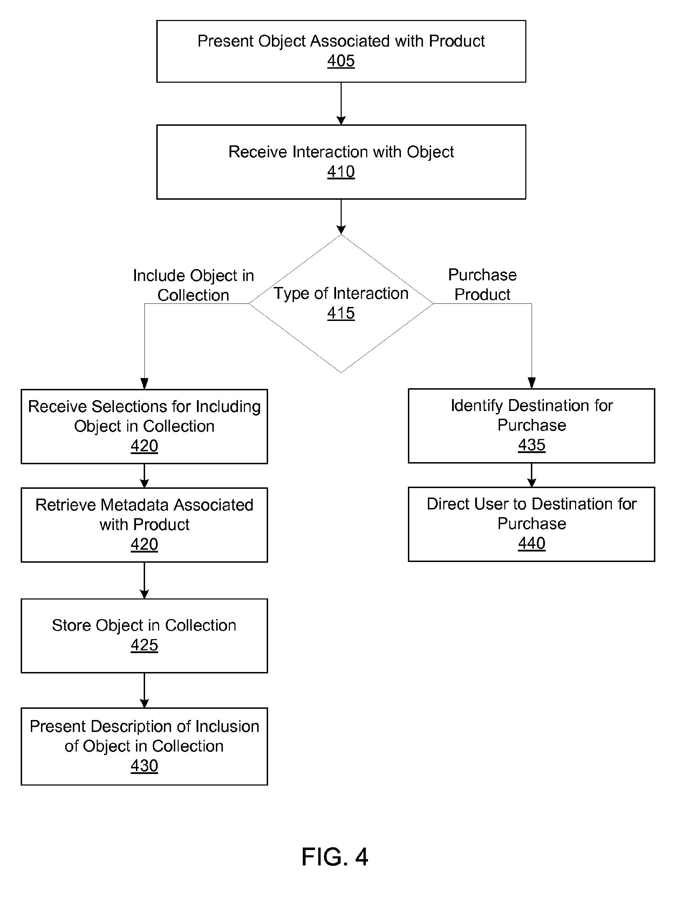

FIG. 4 is a flow chart of one embodiment of a method for interacting with an object associated with a product. FIG. 5 shows an example of a user interface for interacting with an object associated with a product, and is referenced in conjunction with FIG. 4. The social networking system 140 presents 405 a user with an object associated with a product. For example, an image, story or description of a product is presented 405 to a user. One or more interface elements for interacting with the object may also be presented. For example, FIG. 5 shows options 510 for purchasing a product associated with the object or for including the object in a collection associated with the user. The interface elements may be presented with a collection including the object is viewed or when the object is presented 405 in any suitable format. Additional information about the product may also be displayed and/or information about user interactions with the object. In FIG. 5, an informational region 550 is presented along with the object and includes information about the product and information about other users interacting with the object associated with the product.

The social networking system 140 receives 410 an interaction with the object or with an interface element presented with the object and determines 415 a type of the interaction. In the example shown by FIG. 4, the social networking system 140 determines 415 whether the received interaction is a request to include the object in a collection or a request to purchase the product associated with the object. However, in other embodiments, the social networking system 140 may determine 415 whether the received interaction has any suitable type.

If the social networking system 140 determines 415 the received interaction is a request to include the object in a collection, the social networking system may receive 420 selections or one or more options for including the object in a collection. For example, one or more options are presented to the user, allowing the user to provide additional information about the object or the product. For example, a listing 530 of existing collections associated with the user from which the input was received is presented, allowing the user to select a collection to which the object is included. The listing 530 may identify the collections by name, date, or by any other suitable identifier. Additionally, an option to create a new collection including the object may be presented to the user. If the user selects the option to create a new collection, a prompt 540 to provide information describing the collection, such as a name and/or other descriptive information is presented. For example, if a user chooses to create a new collection, the prompt 540 allows the user to specify a name for the new collection (e.g., "caterers") and a description associated with the collection ("candidate catering services for my New Year's Eve party").

Additional options may be presented to the user and selected 420 to provide additional information about the object or the collection in which the object is to be included. For example, in FIG. 5, a comment interface 520 is presented allowing the user to provide a description of why the object is included in a collection or to provide other information about the product associated with the object. Including a comment allows a user to express a reason for including the object in the collection, and may allow the user to more easily organize objects within a collection. For example, a user may provide the reason "cupcake decorating ideas using fondant" when collecting a cake decorating product. Additionally, a user may share information about the product associated with the object to be added to a collection. For example, the user may specify additional users to which the object is communicated and may specify how the additional users receive information about the object (e.g., via instant message, e-mail, text message, etc.).

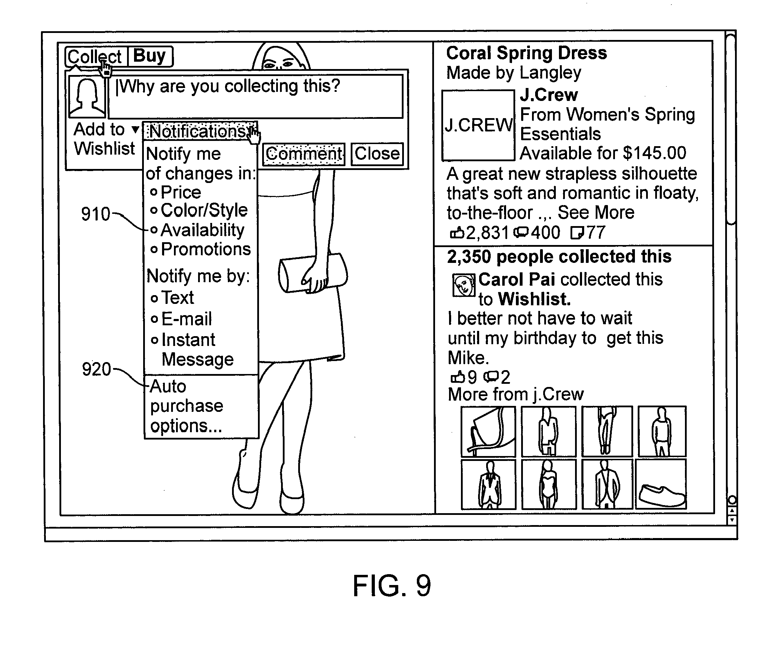

Additional options that may be selected when including an object in a collection include specifying criteria for notifying the user of modifications to metadata associated with the product corresponding to the option or specifying conditions for performing an action associated with the object or the product. For example, a user may specify criteria so that the user is not notified of changes to metadata associated with the product unless the metadata satisfy one or more of the criteria. As another example, a user may specify conditions so that an action is performed when the metadata satisfy one or more of the conditions (e.g., the product is purchased when its price reaches a specified amount or when its availability reaches a threshold). For example, the social networking system 140 may automatically purchase a silver toaster for a user if the user stores a request to purchase a specified model of toaster when the model becomes available in silver. User notification of product information updates and actions taken on behalf of users when information related to collected products changes is further described below in conjunction with FIG. 9.

Metadata associated with the product corresponding to the object to be included in the collection is retrieved 420 and the object is stored 425 in the collection and associated with the metadata. In one embodiment, the metadata is stored along with the object; alternatively, the object is stored with a reference to a location for retrieving the metadata. The metadata may be retrieved 420 from any suitable location, such as a third party website 130, the object store 230, or any other source.

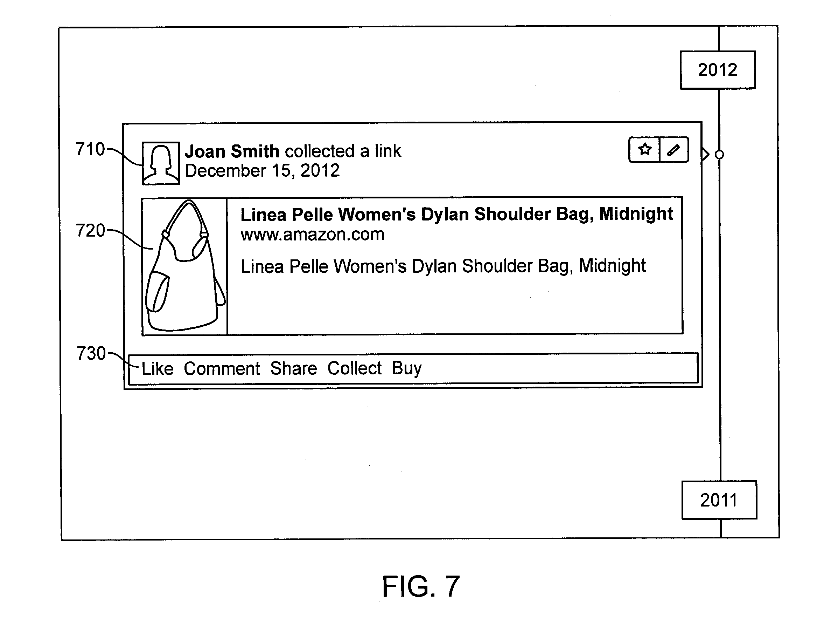

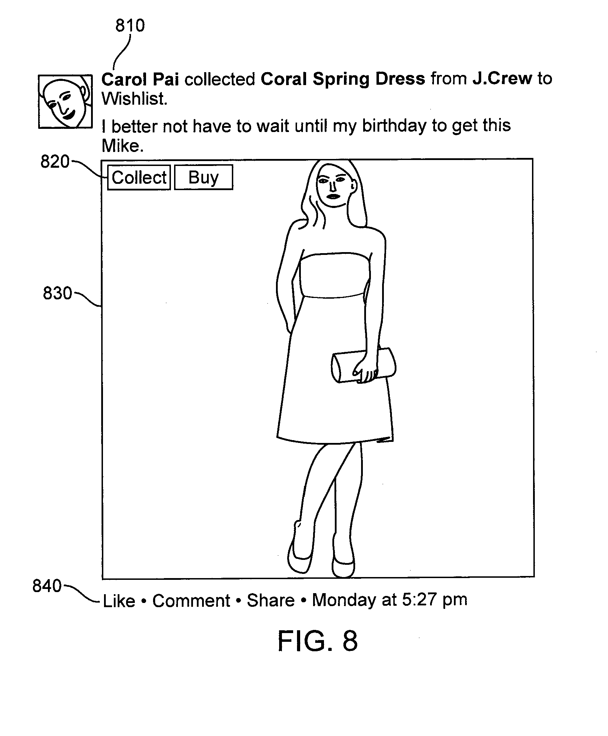

When the object is stored 425 in the collection, the interface generator 220 may present 430 a description of the inclusion of the object in the collection to one or more users, in addition to presenting the object when the collection is accessed. For example, the interface generator 220 generates a story identifying the user including the object in the collection as well as describing the inclusion of the object in the collection. The story may be presented 430 in a newsfeed shown to users connected to the user including the object in the collection and/or may be presented 430 on a profile page associated with the user including the object in the collection. Presentation of the story on a profile page associated with the user is further described below in conjunction with FIG. 7, and presentation of the story in a newsfeed is further described below in conjunction with FIG. 8.

If the social networking system 140 determines 415 the type of interaction is a request to purchase the product associated with the object, the social networking system 140 identifies 435 a destination for purchasing the product. For example, the social networking system 140 retrieves metadata associated with the product and identifies a third party website 130 or other source for purchasing the product. The social networking system 140 directs 440 the user to the destination for purchasing the product (e.g., a third party website 130, an application, etc.). Interface elements for including the object in a collection may also be presented when the received interaction is determined 415 to be a request to purchase the product, allowing the user to also include the object in a collection as described above.

### Inclusion of Objects in a Collection via Third Party Websites

In addition to allowing users to collect products presented via objects within the social networking system 140, users of the social networking system 140 may identify products presented by third party websites 130 for inclusion in a collection. For example, a third-party website includes an action button, such as a "collect" button that communicates information associated with a product on a third party website 130 to the social networking system 140. In one embodiment, hypertext markup language (HTML) instructions on a web page presented by a third party website 130 includes instructions to generate an iframe within the web page that includes content generated from information provided by the social networking system 140. When a user interacts with the content of the iframe, such as an action button, information about a product on the web page associated with the content of the iframe is communicated to the social networking system 140. The iframe retrieves information about the user, allowing the social networking system 140 to identify a user profile associated with a collection to which the product is to be included. Information about the user's identity is not required to be provided to the third party website 130, as the iframe, which is associated with the domain of the social networking system 140, retrieves identifying information for the user from a cookie stored on the client device 110 and associated with the social networking system 140. Communication of information between a third party website 130 and the social networking system 140 is further described in U.S. Patent 8,250,145, which is herein incorporated by reference in its entirety.

### Collections Interface and Story Generation

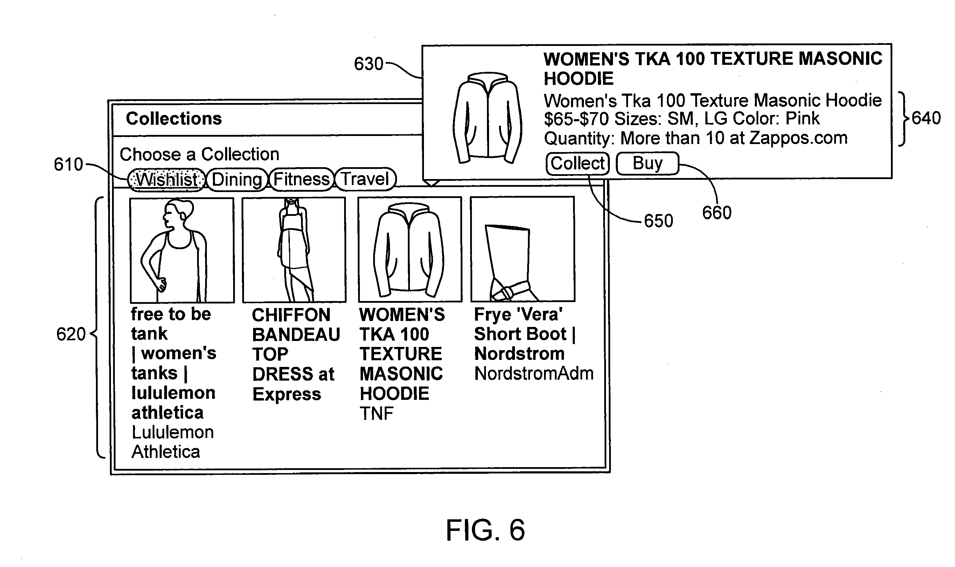

A user may view objects included in a collection through a collections interface, an example of which is shown in FIG. 6. The interface generator 220 generates the collections interface using data in the user profile store 205 and/or the object store 230. In the example shown by FIG. 6, the collections interface presents a list 610 of existing collections 610 and metadata associated with products corresponding to objects in a viewed collection 620. A detail interface 630 about a product may be displayed when the user interacts with the object associated with the product and included in the viewed collection 620. The detail interface 630 may include metadata 640 associated with the object, such as price, style information, availability, third party websites where the item may be purchased, product description, or any suitable information. In some embodiments, an interface element 650 to include the object associated with the product in an additional collection, such as a collection of a user viewing the collection, an interface element to purchase 660 the product, or any other suitable interface elements may be included in the detail interface 630.

As described above, the social networking system 140 may notify other users of the social networking system that a user has included an object in a collection. The social networking system 140 may generate a story identifying the user including the object in the collection and describing the product associated with the object included in the collection. The story may be presented to users through any suitable communication channel. FIG. 7 shows an example of a story presented on a user's profile page that describes a product associated with an object included in a collection by the user. Others users view the story shown in FIG. 7 when viewing the user's profile page.

In the example shown by FIG. 7, the story identifies the user 710 including the object in a collection, a description 720 of the product corresponding to the object included in the collection, and one or more interface elements 730 allowing the user to interact with the described product. In FIG. 7, the interface elements 730 allow a user to express a preference for the described product, comment on the described product, share the story with additional users, include an object associated with the described product in a collection, or purchase the described product. However, in other embodiments, additional and/or different interface elements 730 may be presented. Examples of additional interface elements 730 include elements for viewing additional information associated with the described product, viewing other products associated with objects in the collection including the object associated with the described product, viewing other collections including the object associated with the described product, viewing products related to the described products, or performing any other suitable actions.

FIG. 8 shows an example of a story describing a product associated with an object included in a collection by the user that is presented by a news feed shown to users connected to the user including the object in the collection. In the example of FIG. 8, the story identifies the user 810 including the object in a collection, an image or other description 830 of the product included in the collection, one or more interface elements 820, 840 allowing the user to interact with the described product. Examples of the interface elements 820, 840 allow a user to express a preference for the described product, comment on the described product, share the story with additional users, include an object associated with the described product in a collection, or purchase the described product. However, in other embodiments, additional and/or different interface elements 820, 840 may be presented, as described above in conjunction with FIG. 7.

### Actions Responsive to Metadata Changes

As described above, a user may specify one or more criteria for performing actions based on metadata associated with a product corresponding to an object included in a collection. This allows the user to receive up-to-data metadata associated with the product, or to be notified when the metadata satisfies one or more user-defined criteria. FIG. 9 is an example user interface for specifying criteria for performing one or more actions. The social networking system 140 may notify a user of changes in metadata for any products associated with objects in a user's collection, of changes in metadata for a subset of products associated with objects with a collection, or of changes in metadata for products associated with objects in a specified collection. In one embodiment, the social networking system 140 adds an object associated with a product to a specified collection if the user requests notifications of changes in metadata associated with the product.

In one embodiment, the user is notified of changes to metadata when the metadata satisfies one or more criteria specified by the user. For example, the user is notified of changes to the metadata when specific metadata satisfies one or more criteria. In the example shown by FIG. 9, the user is presented with a listing 910 of metadata, allowing selection of specific metadata or types of metadata (e.g., price, style, color, availability, promotions, configurations, etc.). For example, a user may choose to be notified of changes to metadata associated with a product if the price of the product has changed by more than 10% of the original price, if the updated price is less than a threshold price, or if the product becomes available in a certain size or color. In another embodiment, the social networking system 140 may notify users of changes to specific metadata. Criteria for notifying a user of changes to metadata may be used by the social networking system 140 to determine target audiences for advertisements. For example, if a user specifies to be notified of changes in availability for tickets to a particular concert, the social networking system 140 may include the user in an audience to receive advertisements for albums by an artist performing at the concert.

The interface shown by FIG. 9 also allows a user to select a notification channel for receiving notifications of changes to metadata. For example, the interface presents a notification channel listing 920 allowing the user to specify how notifications of changes to metadata are received. For example, users may select to receive notifications of changes to metadata via text messages, electronic mail, instant messenger, mobile push notification, or any suitable notification channel. Changes in metadata may be presented to the user in a variety of formats. For example, differences between prior metadata and updated metadata are presented using a split screen view showing the metadata when the product was collected, or at the time the user last viewed the product in his collection, and the current data. Alternatively, the differences may be highlighted on a single screen (e.g., through underscoring, highlighting, bolding, different colored font, etc.).

Additionally, a user may specify one or more actions to be taken when metadata associated with a product corresponding to an object in a collection satisfy one or more criteria. For example, a user specifies purchasing of a product when the product's price reaches a threshold value, reaches a threshold availability, or becomes available in a specified color or style. In one embodiment, to configure a purchase when metadata satisfy one or more criteria, the social networking system 140 requests payment information from the user, such as financial account information for the user or purchase information for a third-party website 130 from which the product is to be purchased; this information may be stored in the user's user profile. Financial account information associated with, or included in, a user profile may be used to perform the purchase when the metadata satisfy one or more criteria. Other information may be requested or retrieved from a user profile to perform the purchase (e.g., billing address, shipping address, phone number, email address, delivery options, gift wrap/message options, promotion codes, etc).

Other actions may be performed when the metadata satisfy one or more criteria. Examples of actions include: bidding on a product, sending notifications to other users, requesting a price adjustment, initiating a return (e.g., in the event of a product recall), etc. For example, if a user includes an object associated with an autographed poster that is being auctioned in a collection, the user may request the social networking system 140 to place a bid on behalf of the user for $100.00 five minutes remain before the auction ends. A user may be notified of actions performed by the social networking system 140 responsive to metadata satisfying one or more criteria through a default communication channel or through a user-specified communication channel (e.g., text messaging, e-mail, mobile push notification, etc.).

### Summary

The foregoing description of the embodiments of the invention has been presented for the purpose of illustration; it is not intended to be exhaustive or to limit the invention to the precise forms disclosed. Persons skilled in the relevant art can appreciate that many modifications and variations are possible in light of the above disclosure. Some portions of this description describe the embodiments of the invention in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereo f.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described. Embodiments of the invention may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments of the invention may also relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

## Claims

1. A method comprising:
storing one or more objects each associated with products in a set of objects associated with a user profile of a user of a social networking system;
receiving metadata associated with one or more of the products associated with an object in the set of objects;
determining whether the received metadata satisfies one or more criteria stored by the social networking system and associated with the user profile; and
performing an action responsive to determining the received metadata satisfies one or more of the criteria.

2. The method of claim 1, wherein the one or more criteria are specified by the user.

3. The method of claim 1 or 2, wherein the action comprises purchasing a product associated with received metadata satisfying the one or more criteria.

4. The method of any of claims 1 to 3, wherein purchasing the product associated with received metadata satisfying the one or more criteria comprises:
identifying a third-party system associated with the product;
retrieving financial account information associated with the user; and
transmitting a request to purchase the product to the third-party system associated with the product, the request including a subset of the retrieved financial account information.

5. The method of any of claims 1 to 4, wherein the action comprises notifying the user of the received metadata.

6. The method of claim 5, wherein:
identifying a notification channel associated with the user; and
sending a notification of the updated metadata through the identified notification channel;
wherein preferably the notification channel is selected from a group consisting of: text message, electronic mail, mobile push notification, instant messenger, and any combination thereof.

7. The method of any of claims 1 to 6, wherein the metadata is selected from a group consisting of: product name, description, image, price, quantity available, color, style, promotional offers, information provided by a seller, information provided by a brand owner, and any combination thereof.

8. A method, in particular according to claim 1, comprising:
storing one or more objects each associated with products and associated with metadata describing one or more characteristics of each products in a set of objects associated with a user profile of a user of a social networking system;
storing one or more criteria for notifying the user of changes of the metadata describing one or more characteristics of a product associated with an object in the set;
retrieving updated metadata associated with one or more products associated with objects in the set from a third party website associated with a domain differing from a domain of the social networking system;
determining one or more differences between the updated metadata for one or more products and the metadata;
associating the updated metadata with objects in the set for which the updated metadata was received; and
performing an action if the updated metadata satisfies one or more criteria stored by the social networking system.

9. The method of claim 8, wherein the one or more criteria are specified by the user.

10. The method of claim 8 or 9, wherein the action comprises purchasing a product associated with updated metadata satisfying the one or more criteria.

11. The method of claim 10, wherein purchasing the product associated with updated metadata satisfying the one or more criteria comprises:
identifying a third-party system associated with the product;
retrieving financial account information associated with the user; and
transmitting a request to purchase the product to the third-party system associated with the product, the request including a subset of the retrieved financial account information.

12. The method of any of claims 8 to 11, wherein the action comprises notifying the user of differences between the updated metadata and the metadata;
wherein preferably notifying the user of differences between the updated metadata and the metadata comprises:
identifying a notification channel associated with the user; and
sending a notification of the differences between the updated metadata and the metadata through the identified notification channel.

13. The method of any of claims 8 to 12, wherein the action comprises notifying the user of the updated metadata;
wherein preferably:
identifying a notification channel associated with the user; and
sending a notification of the updated metadata through the identified notification channel;
wherein preferably the notification channel is selected from a group consisting of: text message, electronic mail, mobile push notification, instant messenger, and any combination thereof.

14. The method of any of claims 8 to 13, wherein the metadata is selected from a group consisting of: product name, description, image, price, quantity available, color, style, promotional offers, information provided by a seller, information provided by a brand owner, and any combination thereof.
